# FASCICULE DE BREVET EUROPEEN

(11) **EP 2 588 350 B1**
(45) Date de publication et mention de la délivrance du brevet: **23.05.2018**
(21) Numéro de dépôt: 11727172.6
(22) Date de dépôt: 22.06.2011
(51) Int. Cl.: B60S 1/38

(54) **CONNECTEUR D'ESSUIE-GLACE À CONTACT ÉLECTRIQUE INTERNE FAISANT RESSORT**
VERBINDER MIT INTERNER ELEKTRISCHER KONTAKTFEDER FÜR WINDSCHUTZSCHEIBENWISCHER
WINDSCREEN WIPER CONNECTOR INCLUDING AN INTERNAL ELECTRICAL CONTACT SPRING

(30) Priorité: 30.06.2010 FR 1002780
(43) Date de publication de la demande: 08.05.2013
(73) Titulaire: Valeo Systèmes d'Essuyage, 78322 Le Mesnil Saint Denis (FR)
(72) Inventeur: CAILLOT, Gérald, F-78720 Cernay La Ville (FR); IZABEL, Vincent, F-91380 Chilly Mazarin (FR); JARASSON, Jean-Michel, F-78321 Le Mesnil Saint Denis (FR)
(74) Mandataire: Callu Danseux, Violaine
(86) Numéro de dépôt international: PCT/EP2011/060472
(87) Numéro de publication internationale: WO 2012/000868

(56) Documents cités:
- EP-A2- 2 272 727
- DE-A1-102008 027 566
- US-A- 3 408 678
- US-A- 3 461 477
- US-A- 3 489 884
- US-A1- 2009 070 952

## Description

Le domaine de la présente invention est celui des équipements pour les véhicules, et plus particulièrement celui des équipements pour l'essuyage du pare-brise des automobiles.

Les automobiles sont couramment équipées de systèmes d'essuyage et de lavage pour assurer un essuyage et un lavage du pare-brise et éviter que la vision qu'a le conducteur de son environnement soit perturbée. Ces systèmes d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balais plat"), d'un ensemble semi-rigide qui maintient la lame racleuse sur toute sa longueur. Dans les deux solutions le balai est rattaché au bras tournant de l'essuie-glace par un ensemble constitué d'un connecteur mécanique et d'un adaptateur. Le connecteur est une pièce qui est fixée directement sur la structure du balai ou directement sur le flat blade, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Les essuie-glaces sont également équipés de dispositifs d'amenée d'un liquide lave-vitre qui est acheminé depuis un réservoir situé sur le véhicule et qui est pulvérisé en direction du pare-brise par des gicleurs situés généralement sur le capot ou sur la grille de baie de pare-brise, soit sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le bras de l'essuie-glace et qui sont raccordées au système de distribution du balai au niveau du connecteur. Le connecteur comporte ainsi des orifices aptes à recevoir, par une liaison étanche, les embouts desdites canalisations.

Dans le domaine de l'après-vente des véhicules automobiles, on trouve également des dispositifs de chauffage de l'essuie-glace pour dégeler le balai en cas de grand froid et éviter qu'il colle au pare-brise sous l'action du gel. Ces dispositifs, qui sont plus spécialement adaptés à des balais flat blade, comportent généralement une vertèbre intégrée dans l'ensemble de la lame racleuse et sur laquelle sont déposées des éléments chauffants électriques. Ils nécessitent eux aussi un dispositif de connexion électrique, placé au niveau du connecteur, pour transmettre à la vertèbre le courant électrique provenant du véhicule.

La vertèbre est constituée par une semelle rigide sur laquelle sont déposées deux pistes métalliques dans lesquelles circule le courant électrique pour former une résistance chauffante. Le connecteur doit assurer la transmission du courant, en évitant les courts-circuits et en assurant un contact franc avec les éléments chauffants. DE-A-102008027566 montre le préambule de la revendication 1. La présente invention a pour but d'améliorer la situation en proposant de réaliser un cheminement du courant électrique à l'intérieur du connecteur qui soit le plus simple possible pour des raisons de coûts et de simplicité de fabrication, tout en garantissant une absence de court-circuit et un bon contact avec les éléments chauffants, notamment les résistances chauffantes implantée sur la vertèbre, en dépit d'éventuelles sollicitations liées soit au niveau vibratoire soit aux imperfections de la route.

A cet effet, l'invention a pour objet un balai d'essuie-glace muni d'un connecteur de maintien entre un balai et un bras d'essuie-glace, le balai comprenant un renfort qui s'étend dans la longueur dudit balai et sur lequel est déposé au moins un élément chauffant, le connecteur comportant un dispositif interne de liaison électrique entre, d'une part, un connecteur électrique relié au circuit électrique du véhicule et, d'autre part, au moins un élément chauffant implanté dans ledit balai. Il est caractérisé en ce que ledit dispositif interne de connexion comporte au moins une pièce métallique exerçant une pression contre ledit élément chauffant de façon à assurer une permanence de son contact avec ledit élément chauffant.

Grâce à cet appui contre l'élément chauffant, le contact entre le dispositif interne au connecteur et l'élément chauffant est assuré quelles que soient les sollicitations, notamment des vibrations ou des chocs, subies par le système d'essuyage, consécutivement aux imperfections de la route sur laquelle se déplace le véhicule.

Bien entendu, la liaison mécanique entre le balai et le bras d'essuie-glace peut être opéré par l'intermédiaire d'une pièce supplémentaire de liaison appelé adaptateur.

Ladite pièce métallique s'étend perpendiculairement audit élément chauffant.

Dans une variante de réalisation ladite pièce métallique exerce sa pression par l'intermédiaire d'un joint conducteur qui assure en outre une fonction d'étanchéité hydraulique entre une colonne creusée dans le connecteur et l'extérieur de ce dernier. On assure ainsi à l'aide d'une seule pièce le contact électrique et la nécessaire isolation entre l'intérieur et l'extérieur du connecteur.

Avantageusement ladite pièce métallique assure une fonction de ressort en compression.

Dans un mode particulier de réalisation ladite pièce métallique est une languette se terminant à son extrémité inférieure de manière recourbée, par exemple par une forme en crosse se retournant vers le haut, c'est-à-dire vers un couvercle fermant un orifice de la colonne creuse.

Préférentiellement ladite pièce métallique est emmanchée en force dans la colonne creusée dans ledit connecteur de façon sensiblement perpendiculairement audit élément chauffant.

De façon plus préférentielle ladite pièce métallique comporte des aspérités formant dispositifs d'anti-retour de ladite pièce métallique dans ladite colonne.

Alternativement, la pièce métallique est positionnée dans le couvercle qui ferme le connecteur, la reprise d'effort mécanique étant assurée par la liaison entre le couvercle et le connecteur.

Dans un autre mode de réalisation ladite pièce métallique se prolonge à son extrémité inférieure par un pied ou joint conducteur s'étendant dans une direction inclinée par rapport au plan dans lequel s'étend l'élément chauffant, ledit pied étant muni d'une patte de contact s'étendant dans le plan dudit élément chauffant. Dans ce cas, la patte de contact assure également une fonction de ressort en compression.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale, en perspective, d'un essuie-glace pour véhicule automobile ;
- la figure 2 est une vue de détail de la figure 1 ;
- la figure 3 est une vue en perspective d'un connecteur d'un balai d'essuie-glace, montrant en coupe partielle sa connexion électrique interne, dans un premier mode de réalisation ;
- la figure 4 est une vue en perspective d'un connecteur d'un balai d'essuie-glace, montrant en coupe partielle sa connexion électrique interne, dans un second mode de réalisation ;
- la figure 5 est une vue en perspective, de dessous, du connecteur de la figure 5 ;
- la figure 6 est une vue en perspective d'une coupe longitudinale d'un connecteur selon un troisième mode de réalisation, et
- la figure 7 est une vue en perspective de la connexion électrique interne du connecteur de la figure 6.

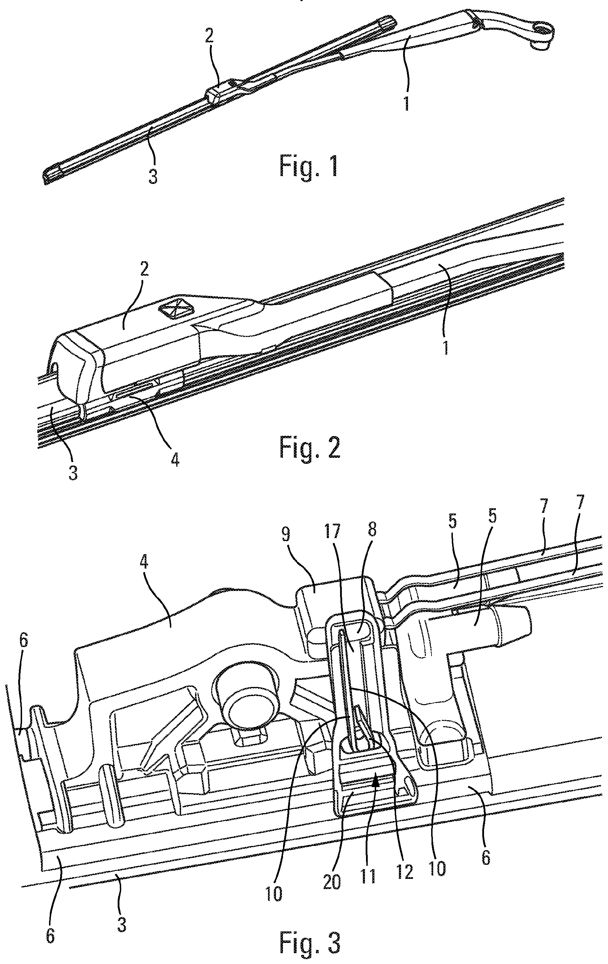

En se référant aux figures 1 et 2, on voit un essuie-glace composé classiquement d'un porte-balai ou bras 1 se terminant à son extrémité par une chape 2, qui est fixée par sertissage sur le bras 1 et qui a pour fonction, par l'intermédiaire d'un adaptateur, de supporter le balai 3 porté par son connecteur 4. De manière alternative, cette chape peut également être formée à l'extrémité de bras par déformation de cette dernière et constituer un ensemble unitaire avec le bras.

Le balai 3 présente un renfort métallique ou vertèbre qui prend la forme d'une lamelle intégrée dans la longueur d'une partie racleuse du balai. Ce renfort supporte des éléments chauffants, notamment des résistances chauffantes dans le but de réchauffer la structure du balais et de le dégeler par grand froid, ce qui permet de conserver les caractéristiques mécaniques des plastiques constituant le balais.

En se référant maintenant à la figure 3, on voit un connecteur 4 monté sur un balai 3. Il comporte deux tubes 5 d'arrivée du liquide de lave-vitre qui traverse le connecteur 4 par des canalisations internes et qui est distribué à deux rampes de distribution 6 pour être projeté contre le pare-brise par des buses positionnées tout le long du balai 3. Il comporte également un circuit de distribution électrique du courant qui est apporté par deux fils d'alimentation 7 portés par le bras 1. Ces fils 7 se terminent par des cosses 8 qui ont pour objet de servir de contact électrique à des moyens de connexion électriques internes au connecteur 4, décrits plus loin. Ces cosses 8 sont positionnées dans un couvercle 9 qui est porté par le connecteur 4 et qui assure l'étanchéité des éléments sous tension vis-à-vis de l'extérieur, notamment l'eau environnante. Sous le couvercle 9, à l'intérieur du connecteur 4, on voit une colonne 17 creusée verticalement, c'est-à-dire perpendiculairement à l'élément chauffant 11 ou à la vertèbre 20 insérée dans le balai 3, dans laquelle est positionnée une pièce métallique 10 de liaison électrique entre le fils 7 d'alimentation en courant électrique et un élément chauffant 11 déposé sur la vertèbre 20. Les pièces métalliques 10 prennent la forme de languettes qui comportent chacune, à leur extrémité supérieure, une fente dans laquelle s'insère une des cosses 8 pour assurer une connexion dite de type fourchette. Leur extrémité inférieure est en revanche réalisée sous la forme d'une crosse 12, se retournant en direction du haut, c'est-à-dire vers le couvercle 9, ce qui crée un contact à ressort contre les éléments chauffants 11. Le connecteur comprend ainsi deux colonnes creuses 17 à l'intérieur desquelles s'étend une languette ou pièce métallique.

Pour assurer leur maintien dans la colonne creuse 17 du connecteur 4 et la permanence d'une force d'appui contre les éléments chauffants 11, les languettes 10 sont munies d'aspérités, du type harpons, et sont emmanchées en force dans ce connecteur. Les harpons pénètrent dans la matière plastique constituant le corps en plastique du connecteur, ce qui évite que les languettes 10 puissent revenir en arrière après leur implantation et que le contact entre elles et les éléments chauffants soit rompu. De manière alternative, les languettes 10 sont fixées ou solidarisées contre le fond du couvercle 9 en collaboration avec les cosses 8. La permanence d'une force d'appui contre les éléments chauffants 11 est alors garantie par la liaison mécanique entre le couvercle 9 et le corps du connecteur 4.

Le couvercle 9 est assemblé sur le connecteur 4 par collage, surmoulage ou clippage, et, dans ce dernier cas, un joint est ajouté pour assurer l'étanchéité entre le couvercle 9 et le connecteur 4.

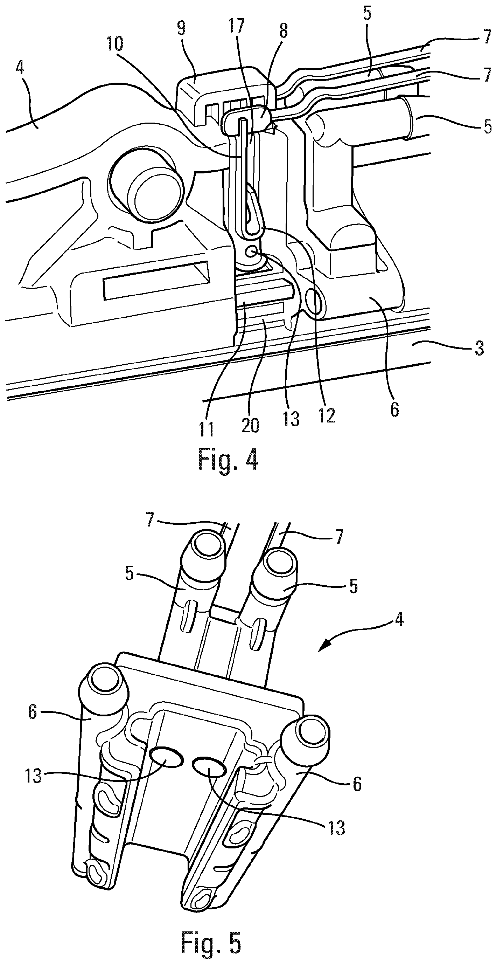

En se référant aux figures 4 et 5, on va maintenant décrire un deuxième mode de réalisation. Les éléments du connecteur identiques au premier mode de réalisation sont désignés par la même référence et ne sont pas décrits à nouveau. Le second mode se distingue essentiellement du premier en ce que les languettes 10 ont une longueur inférieure à celle qu'elles ont dans le premier mode et, en conséquence, ne sont pas en contact direct avec les éléments chauffants 11 du balai 3. Le contact se fait par l'intermédiaire de joints conducteurs 13 qui participent à la fonction de ressort et d'amortissement qu'assurent, seules, les languettes 10 dans le premier mode. Ces joints conducteurs 13 assurent aussi une étanchéité à l'eau entre l'extérieur du connecteur et l'intérieur de ce dernier, au niveau des colonnes creuses 17.

Ces joints 13 sont réalisés en une matière élastique chargée de particules métalliques pour assurer leur conductivité électrique tout en garantissant une flexibilité suffisante par assurer leur fonction d'étanchéité ainsi qu'une fonction de ressort de compression. Comme cela est visible sur la figure 5, ils sont positionnés de façon à traverser le socle inférieur du connecteur et à venir en contact avec les éléments chauffants 11. L'apport de ces joints 13 réside dans la création naturelle d'une étanchéité entre le connecteur 4 et le balai 3, ce qui évite d'avoir recours à une résine pour assurer l'étanchéité de l'ensemble.

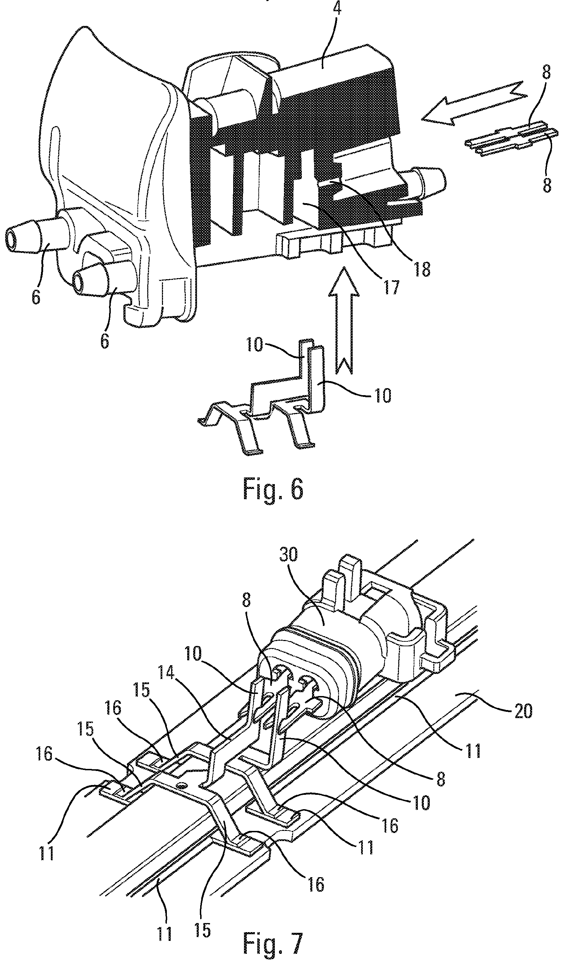

Les figures 6 et 7 décrivent un troisième mode de réalisation de l'invention. Sur la figure 6, le connecteur 4 est découpé selon son plan longitudinal médian de façon à laisser voir les cavités internes dans lesquelles sont implantés les connecteurs métalliques.

Les cosses 8 qui reçoivent le courant électrique en provenance du véhicule par un connecteur électrique sont insérées dans une fente horizontale 18 alors que les languettes 10 sont implantées dans des colonnes 17 creusées verticalement. Les cosses 8 se terminent à leur extrémité destinée à coopérer avec la languette 10 par deux dents formant une attache fourchette dans laquelle lesdites languettes viennent s'insérer.

En se référant plus particulièrement à la figure 7 on voit les cosses 8 positionnées dans un connecteur électrique 30 dans lequel elles sont maintenues et auquel sont raccordés les fils d'alimentation (référence 7, figure 3) en provenance du véhicule, plus particulièrement en provenance d'un connecteur électrique du véhicule. Les languettes 10 se prolongent dans ce troisième mode par une seconde languette 14 qui s'étend longitudinalement pour se diviser en deux pieds 15. Ces deux pieds ont une pente inclinée par rapport à l'horizontale, c'est-à-dire par rapport au plan dans lequel s'étend l'élément chauffant 11 déposée sur la vertèbre ou renfort 20 insérée dans le balai 3, ce qui génère un effet ressort lorsqu'une pression est appliquée verticalement sur la première languette 10. Les pieds 15 se terminent par des pattes 16 qui sont en contact avec les éléments chauffants 11 déposées sur la vertèbre du balai.

On va maintenant décrire le fonctionnement de la connexion électrique à l'intérieur du connecteur 4 selon le premier mode de réalisation. Le fonctionnement de cette connexion selon les deuxième et troisième modes de réalisation est identique.

Le courant électrique arrive au niveau du connecteur 4 par l'intermédiaire des fils d'alimentation 7 qui sont reliés au véhicule par un connecteur électrique, du type de celui référencé 30 sur la figure 7. Il pénètre dans le connecteur 4 au niveau de son couvercle 9 qui assure l'étanchéité entre les contacts métalliques nus placés à l'intérieur et l'environnement extérieur qui peut être baigné par l'eau tombant sur l'essuie-glace. Le courant passe des fils d'alimentation 7 à la languette 10 grâce à la cosse 8 et son contact avec la fente positionnée à l'extrémité supérieure de celle-là, puis dans les éléments chauffants 11 déposées sur la vertèbre 20 du balai 3 où il se transforme en chaleur par effet Joule, pour réchauffer la structure du balais et donc combattre l'action du gel.

La mise en pression de la languette 10 contre les éléments chauffants 11, qui est obtenue par l'emmanchement en force de la languette et de ses aspérités en harpons ou par a fixation de la languette dans le couvercle, garantit un contact de bonne qualité entre les deux pièces métalliques et une permanence de ce contact malgré les sollicitations subies consécutives aux vibrations et les soubresauts occasionnés par les irrégularités de la route.

Dans le second mode de réalisation la mise en pression est assurée par l'écrasement des joints conducteurs 13 par la languette raccourcie 10, qui est comme précédemment emmanchée en force dans le connecteur 4. Comme indiqué précédemment, ce joint assure également une fonction d'étanchéité entre la languette 10 et l'élément chauffant 11 au niveau de la traversée du socle inférieur du connecteur 4.

Dans le troisième mode de réalisation, la mise en pression est assurée par la partie supérieure du connecteur 4 qui appuie sur la languette 10 et qui provoque un écartement relatif des deux pieds 15, avec mise en pression des pattes 16 contre les éléments chauffants 11.

## Revendications

1. Balai d'essuie-glace (3) muni d'un connecteur (4) de maintien entre le balai (3) et un bras d'essuie-glace (1), le balai (3) comprenant un renfort (20) qui s'étend dans la longueur dudit balai et sur lequel est déposé au moins un élément chauffant (11), le connecteur (4) de maintien comportant un dispositif interne de liaison électrique entre, d'une part, un connecteur électrique (30) relié au circuit électrique du véhicule et, d'autre part, l'élément chauffant (11), **caractérisé en ce que** ledit dispositif interne de liaison électrique comporte au moins une pièce métallique (10) exerçant une pression contre ledit élément chauffant (11) de façon à assurer une permanence de contact avec ce dernier.

2. Balai d'essuie-glace (3) selon la revendication 1 dans lequel ladite pièce métallique (10) exerce sa pression par l'intermédiaire d'un joint conducteur (13) qui assure en outre une fonction d'étanchéité hydraulique entre une colonne (17) creusée dans le connecteur (4) et l'extérieur de ce dernier.

3. Balai d'essuie-glace (3) selon l'une des revendications 1 ou 2 dans lequel ladite pièce métallique (10) assure une fonction de ressort en compression.

4. Balai d'essuie-glace (3) selon la revendication 3 dans lequel ladite pièce métallique (10) est une languette se terminant à son extrémité de manière courbée, notamment par une forme en crosse (12) se retournant vers le haut.

5. Balai d'essuie-glace (3) selon l'une des revendications 1 à 4 dans lequel ladite pièce métallique (10) est emmanchée en force dans une colonne (17) creusée dans ledit connecteur (4) de façon sensiblement perpendiculairement à l'élément chauffant (11).

6. Balai d'essuie-glace (3) selon la revendication 5 dans lequel ladite pièce métallique (10) comporte des aspérités formant dispositifs d'anti-retour de ladite pièce métallique (10) dans ladite colonne (17).

7. Balai d'essuie-glace (3) selon la revendication 3 dans lequel ladite pièce métallique (10) se prolonge à son extrémité inférieure par un pied (15) s'étendant dans une direction inclinée par rapport au plan dans lequel s'étend l'élément chauffant (11), ledit pied étant muni d'une patte de contact (16) s'étendant dans le plan de l'élément chauffant (11).

## Patentansprüche

1. Scheibenwischerblatt (3), das mit einem Halteverbinder (4) zwischen dem Blatt (3) und einem Scheibenwischerarm (1) versehen ist, wobei das Blatt (3) eine Verstärkung (20) aufweist, die sich in der Länge des Blatts erstreckt und auf der mindestens ein Heizelement (11) angeordnet ist, wobei der Halteverbinder (4) eine interne Vorrichtung zur elektrischen Verbindung zwischen einerseits einem elektrischen Verbinder (30), der mit dem Stromkreislauf des Fahrzeugs verbunden ist, und andererseits dem Heizelement (11) aufweist, **dadurch gekennzeichnet, dass** die interne Vorrichtung zur elektrischen Verbindung mindestens ein Metallteil (10) aufweist, das einen Druck gegen das Heizelement (11) ausübt, um einen dauerhaften Kontakt mit diesem zu gewährleisten .

2. Scheibenwischerblatt (3) nach Anspruch 1, wobei das Metallteil (10) seinen Druck mithilfe einer leitfähigen Dichtung (13) ausübt, die außerdem eine hydraulische Abdichtungsfunktion zwischen einer hohlen Säule (17) in dem Verbinder (4) und der Außenseite desselben gewährleistet.

3. Scheibenwischerblatt (3) nach einem der Ansprüche 1 oder 2, wobei das Metallteil (10) eine Druckfederfunktion gewährleistet.

4. Scheibenwischerblatt (3) nach Anspruch 3, wobei das Metallteil (10) eine Zunge ist, die sich an ihrem Ende, insbesondere in einer Bogenform (12), die nach oben gerichtet ist, krümmt.

5. Scheibenwischerblatt (3) nach einem der Ansprüche 1 bis 4, wobei das Metallteil (10) in eine hohle Säule (17) in dem Verbinder (4) im Wesentlichen senkrecht zum Heizelement (11) eingepresst ist.

6. Scheibenwischerblatt (3) nach Anspruch 5, wobei das Metallteil (10) Unebenheiten aufweist, die Rückschlageinrichtungen des mindestens einen Metallteils (10) in der Säule (17) bilden.

7. Scheibenwischerblatt (3) nach Anspruch 3, wobei das Metallteil (10) an seinem unteren Enden durch einen Fuß (15) verlängert ist, der sich in eine Richtung erstreckt, die in Bezug auf die Ebene, in der sich das Heizelement (11) erstreckt, geneigt ist, wobei der Fuß mit einer Kontaktlasche (16) versehen ist, die sich in der Ebene des Heizelements (11) erstreckt.

## Claims

1. Windscreen wiper (3) provided with a retaining connector (4) between the wiper (3) and a windscreen wiper arm (1), the wiper (3) comprising a reinforcement (20) that extends lengthwise of said wiper and on which at least one heating element (11) is deposited, the retaining connector (4) including an internal electrical connection device between, on the one hand, an electrical connector (30) connected to the electrical circuit of the vehicle and, on the other hand, the heating element (11), **characterized in that** said internal electrical connecting device includes at least one metal part (10) exerting pressure against said heating element (11) so as to ensure a permanent contact therewith.

2. Windscreen wiper (3) according to Claim 1 wherein said metal part (10) exerts its pressure via a conductive seal (13) that also has a hydraulic sealing function between a hollow column (17) in the connector (4) and the exterior thereof.

3. Windscreen wiper (3) according to either one of Claims 1 or 2 wherein said metal part (10) has a compression spring function.

4. Windscreen wiper (3) according to Claim 3 wherein said metal part (10) is a tongue terminating at its end in a curved manner, notably in a crook shape curving upwards.

5. Windscreen wiper (3) according to any one of Claims 1 to 4 wherein said metal part (10) is force-fitted in a hollow column (17) in said connector (4) substantially perpendicularly to the heating element (11).

6. Windscreen wiper (3) according to Claim 5 wherein said metal part (10) includes asperities forming non-return devices of said metal part (10) in said column (17).

7. Windscreen wiper (3) according to Claim 3 wherein said metal part (10) is extended at its lower end by a foot (15) extending in a direction inclined relative to the plane in which the heating element (11) lies, said foot being provided with a contact lug (16) extending in the plane of the heating element (11).
